# EUROPEAN PATENT SPECIFICATION

(11) **EP 0 688 745 B1**
(45) Date of publication and mention of the grant of the patent: **30.12.1998**
(21) Application number: 95201700.2
(22) Date of filing: 22.06.1995
(51) Int. Cl.: C04B 35/185, C04B 35/195

(54) **A method for the manufacture of a ceramic material and its application as kiln furniture**
Verfahren zur Herstellung eines keramischen Werkstoffs und seine Anwendung als Brennhilfsmittel
Procédé pour la préparation d'un matériau céramique et son application comme accessoire d'enfournement

(30) Priority: 23.06.1994 NL 9401031
(43) Date of publication of application: 27.12.1995
(73) Proprietor: Sphinx Technical Ceramics B.V., 6201 BA Maastricht (NL)
(72) Inventor: Weber, Monica Josefa, D-52146 Würselen (DE)
(74) Representative: Kupecz, Arpad

(56) References cited:
- EP-A- 0 164 028
- EP-A- 0 613 869
- CHEMICAL ABSTRACTS, vol. 109, no. 4, 25 July 1988 Columbus, Ohio, US; abstract no. 26737q, Z.MACH ET AL. 'COMPOSITIONS FOR CORDIERITIC KILN FURNITURE' page 240; column L; & CS-A-248 912 (Z.MACH ET AL.) 15 January 1988
- CHEMICAL ABSTRACTS, vol. 109, no. 2, 11 July 1988 Columbus, Ohio, US; abstract no. 10551p, Z. MACH page 255; & SKLAR KERAM., vol. 38, no. 2, 1988 pages 44-47, 'MULLITE-CORDIERITE CERAMICS MANUFACTURED BY BINDERLESS TECHNOLOGY FOR KILN FURNITURE'

## Description

The present invention relates to a method for the manufacture of a ceramic material starting from a mixture of a MgO, SiO₂ and Al₂O₃ source as well as chamottes and water, and to the application of said ceramic material as kiln furniture.

Such a method is known from *Fachberichte Sprechsaal*, *vol. 117*, *No. 6, 1984, pp.550-553*. The prior art kiln furniture were manufactured from a mixture of a MgO source, chamotte and as SiO₂ and Al₂O₃ source, clay. According to this article the kiln furniture thus obtained seem applicable at temperatures up to 1400°C.

However, it has been shown that the temperature of 1400°C mentioned in the above article could actually not be reached with the ceramic mixture of that time. The literature shows that cordierite- and mullite-containing materials are not suitable at temperatures above 1380°C. The clay present in the starting mixture in an amount of about 20 % by weight does indeed have favourable properties with regard to the workability of the material in the sense that clay facilitates moulding, but the disadvantage is that clay contains various impurities which in practice are responsible for insufficient resistance to temperatures of 1380°C and higher, leading to disintegration of material.

In practice it is therefore not possible to use kiln furniture manufactured from the above-mentioned clay-containing mixture at a temperature above 1380°C, while it is necessary to apply the kiln furniture made from this mixture when firing hard porcelain.

The following impurities are found in clay: Fe₂O₃, TiO₂, CaO, Na₂O and K₂O. These oxides in particular have an unfavourable effect on the crystallization of cordierite, so that the desired high temperature of above 1380°C cannot be realized.

From EP-A-164028 is known a mullite/cordierite composite ceramic with a thermal expansion coefficient close to that of Si at low temperatures which is not suitable for kiln furniture

The objective of the invention is to provide a kiln furniture which is resistant to temperatures of 1380°C and higher.

To this end the invention provides a method according to claim 1 and a kiln furniture as defined in claim 10

The basic mixture is preferably about 20% by weight of MgO-source, about 20% by weight of SiO₂ and Al₂O₃ source and 60% by weight of chamotte.

Usually good results are obtained when the moisture content of the granulates is about 4% by weight.

Sintering should preferably take place at about 1420°C for about 40 hours.

The kiln furniture containing about 50% by weight of cordierite and about 50% by weight of mullite was shown to be particularly suitable for application in firing hard porcelain.

According to the invention it is essential that as SiO₂ and Al₂O₃ source chemically pure materials are used.

Although clay has the above-mentioned disadvantages, it has the great advantage that it improves the workability of the mixture.

Surprisingly it has been shown that a kiln furniture manufactured from the above-mentioned mixture, in which clay is replaced by chemically pure Al₂O₃- and SiO₂-containing substances, is resistant to temperatures of 1380°C and higher. However, it has been shown that the workability of such a mixture leaves something to be desired.

To remove this problem one adds to the starting mixture substances improving the process technology, to wit organic substances such as suspension stabilizers, moulding aids, plasticizer, binding agents and/or deflocculants in an amount of 0.1-1.0% by weight, 0.1-1.0& by weight, 0.1-1.0% by weight, 0.1-5.0% by weight and 0.1-1.0% by weight respectively.

Good results are obtained when using as suspension stabilizer about 0.2% by weight of polyethylene adduct, as plasticizer 0.2% by weight of a cellulose derivative, as binding agent about 2.0% by weight of methyl cellulose and as the deflocculants 0.2% by weight of a huminate.

In general one adds 0.1-8% by weight and preferably about 3% by weight of organic additives, improving the process technology to the starting mixture.

Surprisingly it has been shown that such a mixture is especially suitable for the manufacture of kiln furniture, which are resistant to temperature of 1380°C and higher. Moreover, such mixtures are particularly well workable in spite of the absence of clay. Such kiln furniture are especially well suited for the manufacture of hard porcelain, in contrast to the kiln furniture described in *Fachberichte* of 1984.

Examples of binding agents are methyl celluloses, ethyl celluloses, carboxymethyl celluloses, hydroxyethyl celluloses, polyethylene glycols, polyvinyl alcohols, polysaccharides, polyacrylates, alginates and resins.

Plasticizer according to the invention that may be used are cellulose derivatives and polyglycol ethers.

As suspension stabilizers one might mention polyethylene adducts, wax emulsions, fatty acids, esters and organic phosphoric acid compounds.

Finally, suitable deflocculants within the scope of the present invention are huminates, carbonic acid esters and polyelectrolytes + alkali silicates; phosphates.

The invention further relates to a kiln furniture suitable for firing hard porcelain, such as table ware, whereby it is of great importance that the kiln furniture has a sustained resistance to a temperature of 1380°C and higher.

The invention will now be elucidated by means of the following non-restrictive example.

### EXAMPLE

A kiln furniture was manufactured, starting with a mixture of about 20 parts by weight as MgO source, about 20 parts by weight chemically pure SiO₂ and Al₂O₃ source and about 60% by weight of chamotte. One then added about 0.2% by weight of huminate as deflocculants, about 0.2% by weight of polyethylene adduct as suspension stabilizer, about 0.2% by weight of cellulose derivative as plasticizer, and about 2,0% by weight of methyl cellulose as binding agent.

The mixture thus obtained was subsequently suspended in water in a ratio of 1 part water to 2 parts solids. The grain size of the solid material in the suspension ranged from between 1 µm and 1 mm.

The suspension obtained was then granulated by spray-drying, yielding a granulated material having a grain size of from 10 µm to 2 mm and a residual water content of about 4% by weight.

The freely flowing granulated material was then moulded into a desired shape of a kiln furniture at ambient temperatures and a pressure of about 19,6 MPa (200 kg/cm²).

The green kiln furniture was then dried at 100°C in order to remove the water residue.

Finally the green kiln furniture was sintered at about 1420°C for about 40 hours, yielding the desired kiln furniture which, in mineralogical respect, consisted of about 50% by weight of cordierite and about 50% by weight of mullite.

This end product possessed the following properties:

| | |
|---|---|
| 1. Ceramic density | 2.0 g/cm³ |
| 2. Porosity | 30% by volume |
| 3. Mechanical strength | 9 µPa |
| 4. Modulus of elasticity | 12 GPa |

The thus obtained kiln furniture was shown to be particularly suitable for the firing of hard porcelain, for example table ware, because of its sustained resistance to temperatures of 1380°C and higher, at which such porcelain has to be fired.

## Claims

1. A method for the manufacture of a ceramic material starting with a mixture of a MgO source, SiO₂ and Al₂O₃ source as well as chamottes and water, **characterized** in that the mixture contains 10-30% by weight of the MgO source, 10-30% by weight of the SiO₂ and Al₂O₃ source, both being chemically pure, 40-80% by weight of the chamottes and water mixed in a ratio water:solids of about 1:2 and after admixture of organic additives needed to improve workability and process technology, yielding a suspension in which the particle size of the solids ranges from between 1 µm and 1 mm, after which said suspension is spray-dried, yielding granulates having a moisture content of 1-10 by weight and a grain size of 10 µm - 2 mm, which granulates are compressed into the desired final shape at a pressure of 19,7-49 MPa (150-500 kg/cm²), followed by drying at 100°C for about 24 hours, after which the green products are sintered at 1380-1440°C for 20-80 hours, yielding a ceramic material applicable as kiln furniture having a cordierite content of 40-60% by weight and a mullite content of 40-60% by weight.

2. A method according to claim 1, **characterized** in that about 20% by weight of MgO source, about 20% by weight of SiO₂ and Al₂O₃ source and 60% by weight of chamotte are used.

3. A method according to claim 1 or 2, **characterized** in that the moisture content of the granulates is about 4% by weight.

4. A method according to claims 1-3, **characterized** in that sintering is carried out at about 1420°C and for about 40 hours.

5. A method according to claims 1-4, **characterized** in that the final kiln furniture contains about 50% by weight of cordierite and about 50% by weight of mullite.

6. A method according to claim 1, **characterized** in that said organic additives are selected from suspension stabilizers, moulding aids, plasticizer, binding agents and/or deflocculants.

7. A method according to claim 6, **characterized** in that as suspension stabilizer a polyethylene adduct, as plasticizer a cellulose derivative, as binding agent methyl cellulose and as deflocculants a huminate is used.

8. A method according to claim 6 or 7, **characterized** in that said organic additives are used in an amount of 0.1-8% by weight.

9. A method according to claim 8, **characterized** in that said organic additives are used in an amount of about 3% by weight.

10. A kiln furniture containing 40-60% wt% cordierite and 40-60 wt% mullite with a sustained resistance to a temperature of ≥ 1380°C without product desintegration.

## Patentansprüche

1. Verfahren zur Herstellung eines Keramikmaterials mit einer Mischung aus einer MgO-Quelle, einer SiO₂- und Al₂O₃-Quelle und Schamottematerialien und Wasser als Ausgangsmaterial,
dadurch gekennzeichnet,
daß die Mischung 10 - 30 Gew.-% der MgO-Quelle, 10 - 30 Gew.-% der SiO₂- und Al₂O₃-Quelle, beide in chemisch rainer Form, 40 - 80 Gew.-% der Schamottematerialien und Wasser in einem Verhältnis von Wasser zu Feststoffen von etwa 1:2 enthält und nach der Mischung der organischen Additive, die zur Verbesserung der Verarbeitbarkeit und der Prozesstechnologie notwendig sind, eine Suspension erhalten wird, in der die Teilchengröße der Feststoffe im Bereich von zwischen 1 µm und 1 mm liegt, wonach die Suspension Sprühgetrocknet wird, wodurch man Granulate mit einem Feuchtigkeitsgehalt von 1 - 10 Gew.-% und einer Korngröße von 10 µm bis 2 mm erhält, wobei die Granulate in die gewünschte Endform bei einem Druck von 14.7 - 49 mPa (150 500 kg/cm²) komprimiert werden, wonach sich eine Trocknung bei 100°C für etwa 24 Stunden anschließt, wonach die grünen Produkte bei 1380 - 1440°C 20 - 80 Stunden gesintert werden, wodurch man ein Keramikmaterial erhält das als Brennhilfsmittel mit einem Cordieritgehalt von 40 - 60 Gew.-% und einem Mullitgehalt von 40 - 60 Gew.-% einsetzbar ist.

2. Verfahren nach Anspruch 1,
dadurch gekennzeichnet,
daß etwa 20 Gew.-% der MgO-Quelle, etwa 20 Gew.-% der SiO₂- und Al₂O₃-Quelle und 60 Gew.-% des Schamottematerials eingesetzt werden.

3. Verfahren nach Anspruch 1 oder 2,
dadurch gekennzeichnet,
daß dar Feuchtigkeitsgehalt der Granulate etwa 4 Gew.-% beträgt.

4. Verfahren nach einem der Ansprüche 1 bis 3,
dadurch gekennzeichnet,
daß das Sintern bei etwa 1420°C und für etwa 40 Stunden durchgeführt wird.

5. Verfahren nach einem der Ansprüche 1 bis 4,
dadurch gekennzeichnet,
daß die erhaltene Brennhilfsmittel etwa 50 Gew.-% Cordierit und etwa 50 Gew.-% Mullit enthält.

6. Verfahren nach Anspruch 1,
dadurch gekennzeichnet,
daß die organischen Additive aus Suspensionsstabilisatoren, Formgebungshilfsmitteln, Plastifizierungsmitteln, Bindemitteln und/oder Entflockungsmitteln ausgewählt werden.

7. Verfahren nach Anspruch 6,
dadurch gekennzeichnet,
daß als Suspensionsstabilisator ein Polyethylenaddukt, als Plastifizierungzmittel ein Zellulosederivat, als Bindemittel Methylzellulose und als Entflockungsmittel ein Huminat eingesetzt wird.

8. Verfahren nach Anspruch 6 oder 7,
dadurch gekennzeichnet,
daß die organischen Additive in einer Menge von 0,1 bis 8 Gew.-% eingesetzt werden.

9. Verfahren nach Anspruch 8,
dadurch gekennzeichnet,
daß die organischen Additive in einer Menge von etwa 3 Gew.-% eingesetzt werden.

10. Ein Brennhilsmittel, enthaltend 40 - 60 Gew.-% Cordierit und 40 - 60 Gew.-% Mullit mit einer Dauerbeständigkeit gegen eine Temperatur von ≥ 1380°C ohne Zerfall des Produktes.

## Revendications

1. Procédé pour la production d'une matière céramique en partant d'un mélange d'une source de MgO, d'une source de SiO₂ et Al₂O₃ ainsi que de chamottes et d'eau, caractérisé en ce que le mélange contient 10 à 30 % en poids de la source de MgO, 10 à 30 % en poids de la source de SiO₂ et Al₂O₃, ces constituants étant chimiquement purs, 40 à 80 % en poids des chamottes et d'eau, en mélangant en un rapport eau:matières solides d'environ 1:2, et, après le mélange d'additifs organiques requis pour améliorer l'aptitude au traitement et la technologie de mise en oeuvre du procédé, on obtient une suspension dans laquelle la grosseur de particules des matières solides est compris dans l'intervalle de 1 µm à 1 mm, puis la dite suspension est séchée par atomisation, ce qui donne des granulats ayant une teneur en humidité de 1 à 10 % en poids et une grosseur de grain de 10 µm à 2 mm, granulats qui sont comprimés sous la forme finale désirée à une pression de 14,7 à 49 MPa (150 à 500 kg/cm²), puis séchés à 100°C pendant 24 heures, les produits crus étant ensuite frittés à une température de 1380 à 1440°C pendant un temps de 20 à 80 heures, ce qui donne une matière céramique utilisable comme accessoire d'enfournement ayant une teneur en cordiérite de 40 à 60 % en poids et une teneur en mullite de 40 à 60 % en poids.

2. Procédé suivant la revendication 1, caractérisé en ce qu'une quantité d'environ 20 % en poids de source de MgO, une quantité d'environ 20 % en poids de source de SiO₂ et Al₂O₃ et une quantité de 60 % en poids de chamottes sont utilisées.

3. Procédé suivant la revendication 1 ou 2, caractérisé en ce que la teneur en humidité des granulats est égale à environ 4 % en poids.

4. Procédé suivant les revendications 1 à 3, caractérisé en ce que le frittage est effectué à une température d'environ 1420°C et perdant un temps d'environ 40 heures.

5. Procéde suivant les revendications 1 à 4, caractérisé en ce que l'accessoire d'enfournement final contient environ 50 % en poids de cordiérite et environ 50 % en poids de mullite.

6. Procédé suivant la revendication 1, caractérisé en ce que les additifs organiques sont choisis entre des stabilisants de suspension, des adjuvants de moulage, des plastifiants, des liants et/ou des défloculants.

7. Procédé suivant la revendication 6, caratérisé en ce qu'on utilise comme stabilisant de suspension un produit d'adduction de polyéthylène, comme plastifiant un dérivé de cellulose, comme liant la cellulose méthylique et comme défloculant un huminat.

8. Procédé suivant la revendication 6 ou 7, caractérisé en ce que les additifs organiques sont utilisés en une quantité de 0,1 à 8 % en poids.

9. Procédé suivant la revendication 8, caractérisé en ce que les additifs organiques sont utilisés en une quantité d'environ 3 % en poids.

10. Accessoire d'enfournement contenant 40 à 60 % en poids de cordiérite et 40 à 60 % en poids de mullite, présentant une résistance prolongée à une température supérieure ou égale à 1380°C sans dissociation du produit.
